# EUROPEAN PATENT SPECIFICATION

(11) **EP 0 700 252 B1**
(45) Date of publication and mention of the grant of the patent: **31.01.2001**
(21) Application number: 94915962.8
(22) Date of filing: 02.05.1994
(51) Int. Cl.: A23B 7/10

(54) **METHODS FOR PRESERVING FOODS AT AMBIENT TEMPERATURES**
VERFAHREN ZUR BEWAHRUNG VON LEBENSMITTELN BEI UMGEBUNGSTEMPERATUREN
PROCEDES DE CONSERVATION D'ALIMENTS A LA TEMPERATURE AMBIANTE

(30) Priority: 03.05.1993 US 55106
(43) Date of publication of application: 13.03.1996
(73) Proprietor: Vlasic Foods International, Inc., Cherry Hill, NJ 08034-5071 (US)
(72) Inventor: ADAMS, James, R., Hockessin, DE 19707 (US); KITTEL, Ivan, D., Rochester Hills, MI 48309 (US); HANLIN, John, H., Marlton, NJ 08053 (US); SPONTELLI, Christopher, C., Radnor, PA 19087 (US); MAYER, Brian, K., Atco, NJ 08004 (US); KO, Sandy, S., Abington, PA 19001 (US)
(74) Representative: Beck, Simon Antony
(86) International application number: US9404783
(87) International publication number: WO9424877

(56) References cited:
- EP-A- 0 482 322
- FR-A- 1 374 435
- US-A- 3 403 032
- US-A- 3 480 448
- US-A- 5 151 286
- A. LOPEZ: "A complete course in canning" 1975 , THE CANNING TRADE , BALTIMORE, MARYLAND XP002017572 * page 684 - page 693 *
- R. BINSTED ET AL.: "Pickle & sauce making" 1965 , FOOD TRADE PRESS , LONDON XP002017573 * pages 29-87, 197-213, 234-244 *
- C. PEDERSON, "Microbiology of Food Fermentations", 2nd Edition, published 1979, by AVI Publishing (Westport, Connecticut), pages 98, 99, 158, 159, 172, 173, 178, 179, 190, 191.

## Description

### Background of the Invention

### 1. Field of the Invention.

This invention relates to methods for the long term preservation of foods at ambient temperatures. Using these methods foods such as fruits, vegetables, gourds, and even meats and fish can be packaged and prepared for unrefrigerated shipment and storage without any need for chemical preservatives.

### 2. Description of the Background.

Most foods are perishable over time and have a limited storage period before they must be sold or destroyed. Fruits and vegetables are particularly sensitive to decay and long term storage is nearly impossible without some form of freezing or refrigeration. Typically, these foods can only be preserved using complicated and often expensive procedures. Some of the more common procedures involve dehydration, salinization, acidification, lyophilization, pasteurization, or canning. Although all are useful methods of food preservation each has its drawbacks. For example many foods cannot be pasteurized. Salinization and acidification, although performed safely for hundreds of years, is not possible for certain foods, and few foods can be dehydrated without the irreversible loss of nutrient value. Other methods simply render the food unpalatable.

One of the most common and widely used method of food preservation involves the use of preservatives. Preservatives are chemicals which act to inhibit the putrefaction and decay of perishable foods. Once incorporated into a food, chemical preservatives simply create an environment unfavorable to these microorganisms that would otherwise multiply and render a food inedible. Some of the simple preservatives are relatively harmless whereas others pose more of a risk. For example, nitrites, sorbate, and benzoate are widely used in foods such as fresh fruits, vegetables, meats, oils, and juices, all of which are consumed daily. However, these chemical agents can produce a hypersensitivity reaction in certain individuals. Although a rare occurrence, avoidance is clearly desirable as there will always be those individuals in the population which are unable to tolerate even the smallest doses.

There is also a significant trend in the industry away from the use of preservatives. Preservatives are expensive and their cost is added to the cost of the food. To reduce this cost would be clearly preferable. Further, consumers are increasingly demanding products which are free of all added chemicals. To be able to eliminate the use of preservatives would produce a highly desirable product. One method of avoiding preservatives is described in US 3403 032, which discloses a food fermentation process whereby food is packaged in a manner to encourage lactic acid formation and thereby fermentation after packaging. The method allows the long-term storage of food, preservation being effected by fermentation during storage.

### Summary of the Invention

According to the present invention, there is provided a method of preserving food as claimed in appended claim 1.

Preferred features of the invention are defined in the other appended claims.

One embodiment of the invention is directed to a method for the long term preservation of food including fruits, vegetables, gourds, meats, and even fish. Once food is fermented to remove at least most of its sugar content. The fermented food is heated to inactivate endogenous catalytic enzymes and packaging into a container under near vacuum conditions to reduce package head space. The preferred embodiment of this invention is the cucumber and cucumbers prepared according to the methods of the invention can be preserved for at least six months.

Another embodiment of the invention is directed to the foods packaged by the method of the invention. Foods such as fruits, vegetables, and gourds are stable for upwards of six months at ambient temperatures when prepared according to the invention.

Other embodiments and advantages of the invention are set forth in part in the following description and, in part, will be obvious from this description or may be learned from the practice of the invention.

### Brief Description of the Drawings

- Figure 1.: Yeast and Mold Count of Preservative-free Pickles.
- Figure 2.: Texture Assessment of Preservative-free Pickles.
- Figure 3.: Appearance Assessment of Preservative-free Pickles.
- Figure 4.: Flavor Assessment of Preservative-free Pickles.

### Description of the Invention

The present invention, as embodied and broadly described herein, comprises methods for the preservation of foods for long-term storage at ambient temperatures without the use of chemical preservatives. Long term stability of food reduces waste, lowers the risk of contamination, and provides for a more stable and consistent food product. Further, without preservatives, foods are healthier, more desirable and palatable, and do not carry the risks associated with chemically preserved foods.

One embodiment of the invention is directed to a method for preserving otherwise perishable foods for long periods of time at ambient temperatures. This method is useful for the storage of foods such as fruits and vegetables, gourds and legumes, rice and grains, fish, fish products, meats, and poultry. Preferably, the food is a vegetable selected from the group consisting of carrots, cabbage, soy beans, peppers, cauliflower, artichokes including artichoke hearts, onions, tomatoes, string beans, beets, broccoli, brussel sprouts, okra, potatoes, beans including lima beans, pinto beans, and black eyed peas, radishes, corn, asparagus, hearts of palm, and peas. More preferably, the food is a gourd such as a cucumber, or a fruit such as a green olive. Cucumbers subjected to the method of the invention are called pickles which may be prepared as dill, fresh-pack, gherkin, sweet, Kosher, kim-chi, or some similar type. For the purpose of clarity, the remainder of the description shall refer to the preferred embodiment, the preservation of cucumbers, but the embodiments and advantages disclosed are equally applicable to other types of foods.

Cucumbers are harvested and collected into bushels for transportation and processing. After collection, the cucumbers can be stored or immediately processed, for example by sizing, inspecting, grading, washing, and the like, as their condition permits, and loaded into open air tanks. The tanks are filled with a liquid such as, for example, brine, which prevents softening of the cucumbers and influences the type and extent of microbial growth which will occur. High salt concentrations are used to ferment vegetables such as cabbage whereas lower salt concentrations are preferred for firmer foods such as carrots, olives, and cucumbers. Brine comprises water plus between 10% to about 15% sodium chloride, but may also include additional chemicals such as calcium chloride which prevents softening of vegetables during fermentation, or acids such as glacial acetic acid or vinegar, or lactic acid to lower the pH of the brine to below 4.5, preferably about 4.2, which during fermentation supports propagation of the acid producing bacteria. During fermentation, the tanks are purged with air or inert gas, for example nitrogen, to prevent the accumulation of carbon dioxide. Examples of useful fermentation procedures are found in United States patents 3,865,351, 3,932,674 and 5,002,778. Fermentation may be initiated and carried out using the microflora which is indigenous to the food. Although all fermentations are natural processes, this method is sometimes referred to as natural fermentation. Alternatively, fermentation may be initiated using starter cultures of pure bacteria. Starter cultures are pure cultures of one or a few microorganisms which are actively growing. When added to the cucumber tanks, these culture immediately begin the process of fermentation. Dormant starter cultures, for example lyophilized or frozen, may also be used which simply require a longer period of time to begin fermentation. These microorganisms are typically added in sufficient quantities to overwhelm any other which may be present in the cucumber tank to quickly establish the preponderance of the desired bacteria. Preferred starter cultures are selected from the group consisting of species of *Streptococcus, Leuconostoc, Pediococcus, Lactobacillus, Lactococcus, Micrococcus, Saccharomyces, Aspergillus, and* combinations thereof. Some of the preferred species of microorganism include *Lactobacillus plantarum, Pediococcus acidilactici, Pediococcus pentosaceus, or Pediococcus cerevisiae.*

Homofermentation or heterofermentation using one or a few particular microorganisms is preferred for those foods where a certain flavor, consistency, crispness, or result is desired. The fermentation process using the normal microflora of the food is complex and can be divided into four stages, initiation, primary and secondary fermentation, and post-fermentation. During initiation, the various microorganisms compete for dominance in the tank. Large scale growth and competition between the microorganisms of the tank leads to a predominance of one or a few particular types which conduct the majority of primary fermentation. In a short period of time, usually hours to days, the acid producing bacteria predominate. These bacteria secrete large quantities of acid which inhibits the proliferation of most other microorganisms. If at the conclusion of the primary fermentation step there is a residual sugar content, secondary fermentation reduces the sugar content even lower. Secondary fermentation is performed by microorganisms such as yeast.

Fermentation continues for between about one to ten weeks and is preferably about three weeks. The end point of fermentation is determined by a sugar test. The sugar content of the resulting material should be very low, less that about 0.25% sugar. If greater that 0.25% sugar fermentation is continued. After fermentation, the cucumbers are washed, if necessary, transferred to, for example, processing tanks where they are further treated (ie inspected, graded, sorted, and the like), and filled with water.

In the processing tanks, the fermented cucumbers and water are heated to between 54.5°C (130°F) to 65.5°C (150°F) for between about ten minutes and about two hours. Preferably, the cucumbers are heated to 60°C (140°F) for about forty minutes.

This step inactivates catabolic enzymes which may be present, such as polygalacturonase and other enzymes associated with food softening, desalts the fermented cucumbers, and lowers the overall microbiological content. Heating reduces the salt content of pickles about 50% from about 6% to about 3%. Optionally, during heating coloring agents may be introduced into the tanks.

Upon cooling to 37.7°C (100°F), tanks of the heated and desalted pickles are emptied and the food product sorted. Sorting may be by size, color, weight, texture, or any other method which is appropriate for the particular food type. At this step, food is typically cut to a desired size and shape using, for example, slashing equipment, chippers, macerators, and the like. Alternatively, the cucumbers are cut, sliced, or otherwise processed at an earlier step such as prior to fermentation.

The pickles and a covering brine solution are placed into containers at a ratio of between 50:50 to about 90:10 (solid:liquid). The ratio of solid to liquid is determined and measured by, for example, an electronic scale such as an eagle scale. At this stage flavorings, colorings, and other supplements may be added. Each supplement is checked to ensure that it is not introducing contaminants or sugar into the containers. The container may be a fixed pouch of, for example, glass, plastic, or ceramic, or a flexible pouch of, for example, plastic or another similar material. The container is preferably polyethylene or polystyrene plastic, and more preferably a FlexPak™ pouch (Vlasic Foods), a flexible plastic pouch made of polyethylene plastic which has a total capacity of about eighty fluid ounces. Flexible pouches can be easily and safely sealed with a very small amount of headspace. Sealing a FlexPak™ pouch is performed by placing a layer of plastic over the open end of the pouch and sealing it in place with heat. Sealing is performed in a near vacuum to minimize headspace in the packages. Packages prepared by the method of the invention preferably have a headspace of less than about 0.2 % of the total volume of the container. FlexPak™ headspace is no more than five cubic centimeters by volume. Alternatively, fixed containers may also be used. These containers are filled and tightly sealed. They possess less than about 0.2% headspace and are hermetically sealed to prevent leakage.

Pickles stored in this manner can be maintained for long periods of time, such as for at least about two months, preferably about three months and more preferably at least about six months, without any significant degree of spoilage. The degree of spoilage may be determined by the amount of fungal, such as mold, or yeast growth in the pouches. The preferred method is to test for an increase of undesirable microorganisms, such as mold and yeast as an indicator of contamination.

At monthly intervals, or shorter if desired, samples of food and/or liquid are removed from the pouch. Solid material is placed in a nutrient solution and macerated in, for example, a blender or a stomacher. Liquid samples and the macerated solid samples are spread onto standard petri plates containing agar selective for yeast and/or mold such as phytone yeast extract agar (PYEA) or potato-dextrose agar. Colonies which grow are counted, and the number of colonies per sample extrapolated to the total number of microorganisms per gram.

The pickles are screened and analyzed for appearance, flavor, and texture. Generally, these parameters are determined by panels of volunteers or experts. In all cases, color, flavor and appearance are at least acceptable and often as goods and control samples of fresh pickles.

The following examples are offered to illustrate embodiments of the invention, but should not be viewed as limiting the scope of the invention.

### EXAMPLES

### Example 1. Preparation of Preservatives-free Pickles - Fermentation.

Whole cucumbers were collected, graded, sized, sorted and loaded into open air tanks. These tanks were filled with sufficient brine (11.25% NaCI, CaCI₂, pH 4.2 with acetic acid) to cover the cucumbers. Fermentation was initiated from the natural flora of the cucumber surface and proceeded for twenty-one days (average) at ambient temperature (between 20°C and 25°C). Tanks were purged with air during the fermentation process. After twenty-one days the fermented cucumbers, now referred to as pickles, tested negative (less than 0.25% sugar) for sugar content using the Clinitest 5-drop assay (Ames Corp.). These pickles were transferred out of the fermentation tank and placed into processing tanks which were filled with plain water.

### Example 2. Preparation of Preservative-free Pickles - Heating and Processing.

Pickles were heated to and maintained at 60°C (140°F) for forty minutes in the processing tanks. Tanks were allowed to cool to 37.7°C (100°F) and samples were again tested for sugar content which was again less than 0.25% using the Clinitest 5-drop assay. Pickles were removed from the processing tanks, prepared into slices, and assayed again for sugar content as an indication of possible contamination which was again negative, less than 25% sugar. Sliced pickles were screened for physical defects and conveyed to the eagle scale for filling of the containers.

### Example 3. Preparation of preservative-free Pickles - Packaging.

Sliced pickle chips were loaded into 2.25 litres (80 fluid oz). FlexPack™ polystyrene or polyethylene pouches. Under a near vacuum, pouches were sealed by pressing the open end of the pouch onto a heat element, melting and fusing the plastic closed. Head space in the pouch was no more than about five cubic centimeters (<0.2%) for any pouch. Pouches were placed in the dark at ambient temperature for a period of six months. Each month samples were opened and tested for sugar content using the Clinitest assay. Each month the test results were negative.

### Example 4. Preparation of Preservative-free Pickles - Contaminant Testing.

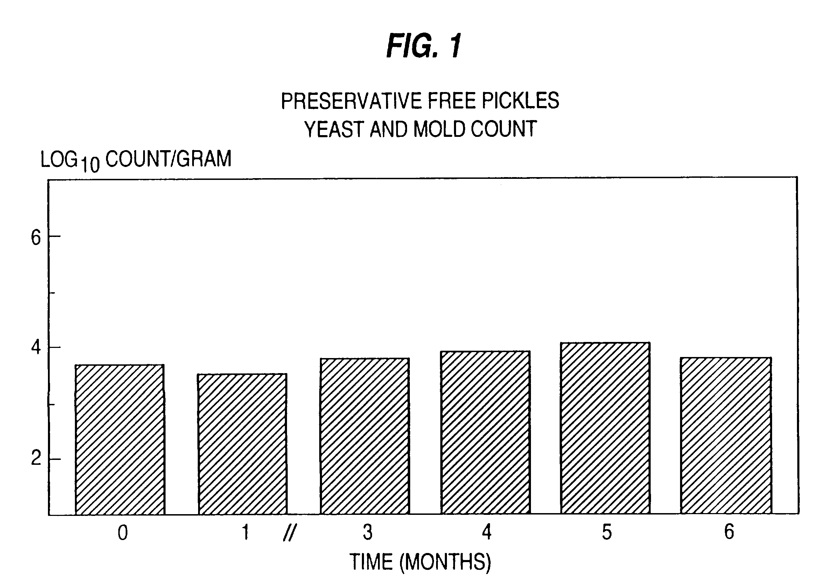

At monthly intervals, individual pouches were opened and samples of liquid were removed. Each sample was tested for growth of yeast and mold. Liquids were diluted ten fold in solutions of peptone-water and directly applied to PYEA plates. Solid samples were placed in a solution of peptone-water, added to a Stomacher (Labline) for about one minute and plated on PYEA plates. Plates were incubated at 30°C (86°F) for four to five days and the number of colonies which developed counted. The count of yeast and mold was made and chartered for the entire six month period (Fig.1). No significant increase in yeast and mold colonies was observed over the entire period of the study.

### Example 5. Preparation of Preservative-free Pickles - Sensory Testing.

The pickles were tested for color, appearance, and flavor. Samples were obtained at monthly intervals and judged by a panel of food technology experts. The color, overall appearance, and flavor of the pickle samples were determined. The experts judged the pickles to be as good as control (9-10), acceptable (6-8), unacceptable (3-5), or rejected (1-2). Control samples were samples of which had been stored in the same solution containing the flavoring agents at 35°F.

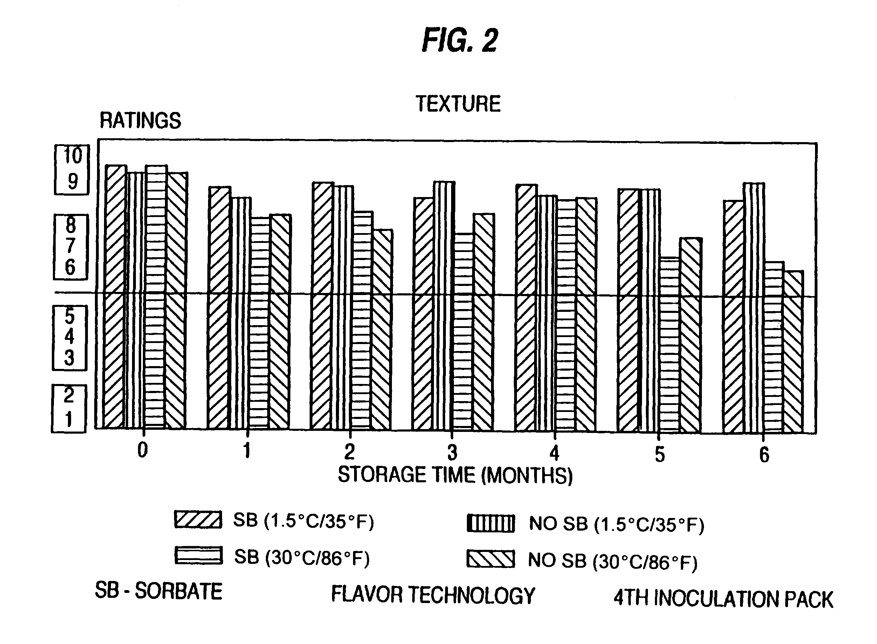

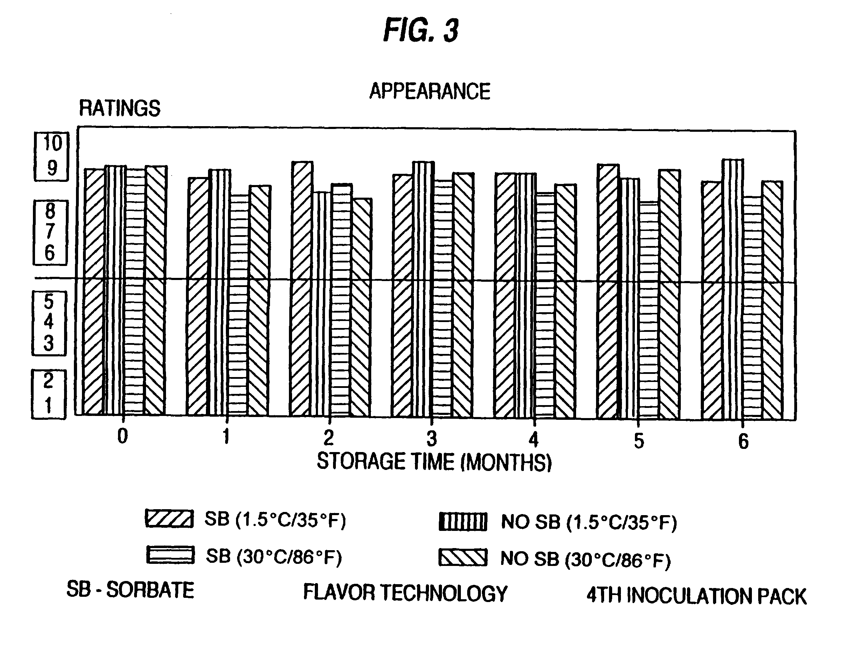

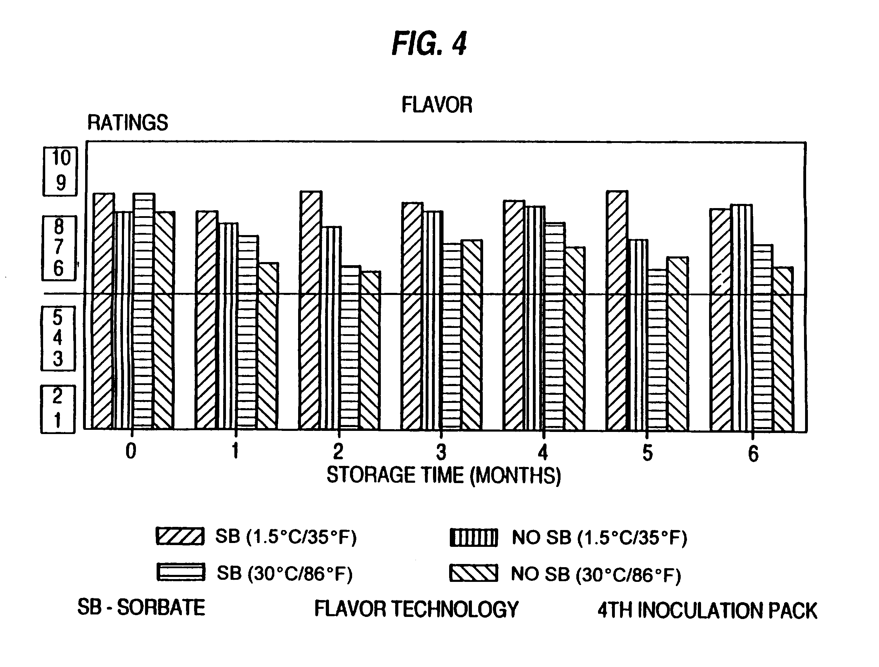

Results were determined for pickles prepared in the presence or absence of potassium sorbate (0.035%) and stored at 1.5°C (35°F) (controls) or 30°C (86°F). The higher temperature was selected as a test to artificially accelerate the aging process and to increase growth of yeast and mold. In the absence of potassium sorbate, texture (Fig. 2), appearance (Fig. 3), and flavor (Fig. 4) were each deemed to be acceptable or as good as controls indicating that the method of the invention produces a product which can be stored at ambient temperatures for long periods of time which is nearly equal in quality to a fresh counterpart.

## Claims

1. A method for preserving food for long term storage at ambient temperatures without chemical preservatives, comprising steps of:
a) removing at least most of the sugar from the food by fermentation in a brine solution having a pH of less than 4.5;
b) heating the fermented food in water to inactivate endogenous catabolic enzymes;
c) package the food in a container with a covering of brine solution; and
d) sealing the container under near vacuum conditions to minimise package headspace.

2. A method according to claim 1 wherein the food is a fruit, a vegetable or a gourd.

3. A method according to claim 2 wherein the fruit is an olive.

4. A method according to claim 2 wherein the vegetable is selected from the carrots, cabbage, soy beans, peppers, cauliflower, artichokes and onions.

5. A method according to claim 2 wherein the gourd is a cucumber.

6. A method according to any preceding claim wherein the long term storage is at least about three months.

7. A method according to any preceding claim wherein the long storage is at least about six months.

8. A method according to any preceding claim wherein fermentation is performed by indigenous microflora on the food.

9. A method according to any preceding claim wherein fermentation is performed by adding a micro-organism culture from species of *Streptococcus, Leuconostoc, Pediococcus, Lactobacillus, Lactococcus, Micrococcus, Saccharomyces, Aspergillus* and combinations thereof.

10. A method according to claim 9 wherein the species of *Lactobacillus is L. plantarum.*

11. A method according to claim 9 wherein the species of *Pediococcus is P. acidilactici, P.pentosaceus or P.cerevisiae.*

12. A method according to any preceding claim wherein the fermented food is heated to between 54°C (130°F) and 66°C (150°F) for between ten minutes to two hours.

13. A method according to any preceding claim wherein the fermented food is heated to 60°C (140°F) for forty minutes.

14. A method as claimed in any preceding claim wherein the salt content of the food after heating is about one half of the salt content of the fermented food before heating.

15. A method as claimed in claim 1 wherein the food is pickles and after heating the salt content of the pickles is reduced by about 50% to about 3%.

16. A method according to any preceding claim wherein the catabolic enzymes inactivated are polygalacturonases.

17. A method according to any preceding claim wherein the container is a flexible pouch.

18. A method according to claim 17 wherein the flexible pouch is made of polyethylene plastic.

19. A method according to claim 18 wherein the flexible pouch is sealed by heating to fuse an open end of the plastic pouch.

20. A method according to any preceding claim wherein the sealed container has about 0.2% by volume of head space.

21. A method according to any preceding claim wherein said covering brine comprises water and salt, and, optionally, flavourings and colourings may be added to the brine in the container.

22. A method according to claim 17 wherein the pouch has about five cubic centimetres of head space when the pouch has a total capacity of 80 fluid ounces (2.273 x 10⁻³m³).

23. A method as claimed in claim 17 wherein the pouch is sealed under near vacuum conditions to minimise package head space.

## Patentansprüche

1. Verfahren zum Bewahren von Lebensmitteln für die Langzeitlagerung bei Umwelttemperatur ohne chemische Konservierungsmittel mit folgenden Schritten:
a. Entfernen des größten Anteils des Zuckers aus dem Lebensmittel durch Gärung in einer Salzlake mit einem pH-Wert kleiner als 4,5;
b. Erhitzen des gegorenen Lebensmittels in Wasser zum Inaktivieren endogener catabolischer Enzyme;
c. Abpacken des Lebensmittels in einem Behälter mit einer Abdeckung aus Lake;
d. Verschließen des Behälters unter einem näherungsweisen Vakuum, um den Kopfraum in der Verpackung möglichst klein zu halten.

2. Verfahren nach Anspruch 1, bei dem das Lebensmittel eine Frucht bzw. Obst, ein Gemüse oder ein Kürbisgewächs ist.

3. Verfahren nach Anspruch 2, bei dem es sich bei der Frucht um Oliven handelt.

4. Verfahren nach Anspruch 2, bei dem das Gemüse aus der Gruppe Karotten, Kohl, Sojabohnen, Peperoni, Blumenkohl, Artischocken und Zwiebeln gewählt ist.

5. Verfahren nach Anspruch 2, bei dem es sich bei dem Kürbisgewächs um Gurken handelt.

6. Verfahren nach einem der vorgehenden Ansprüche, bei dem die Langzeitlagerung mindestens etwa drei Monate beträgt.

7. Verfahren nach einem der vorgehenden Ansprüche, bei dem die Langzeitlagerung mindestens etwa sechs Monate beträgt.

8. Verfahren nach einem der vorgehenden Ansprüche, bei dem die Gärung durch die Eigen-Microflora auf dem Lebensmittel erfolgt.

9. Verfahren nach einem der vorgehenden Ansprüche, bei dem die Gärung durch Zugabe einer Kultur von Microorganismen der Spezies *Streptococcus, Leuconistic, Pediococcus, Lactobacillus, Lactococcus, Micrococcus, Saccharomyces* und *Aspergillus* sowie deren Kombinationen erfolgt.

10. Verfahren nach Anspruch 9, bei des des sich bei der *Lactobacillus-Spezies* um *L. plantarum* handelt.

11. Verfahren nach Anspruch 9, bei des des sich bei der *Pediococcus-Spezies* um *P. acidilactici, P. pentosaceus* oder *P. cerevisiae* handelt.

12. Verfahren nach einem der vorgehenden Ansprüche, bei dem man das vergorene Lebensmittel für die Dauer von zehn Minuten bis zwei Stunden auf eine Temperatur zwischen 54 °C (130 °F) und 66 °C (150 °F) erhitzt.

13. Verfahren nach einem der vorgehenden Ansprüche, bei dem man das vergorene Lebensmittel für die Dauer von 40 Minuten auf eine Temperatur von 60 °C (140°F) erhitzt.

14. Verfahren nach einem der vorgehenden Ansprüche, bei dem der Salzgehalt des Lebensmittels nach dem Erhitzen etwa die Hälfte des Salzgehalts des vergorenen Lebensmittels vor dem Erhitzen beträgt.

15. Verfahren nach Anspruch 1, bei dem es sich bei dem Lebensmittel um Pickles handelt und deren Salzgehalt um etwa 50 % auf etwa 3 % verringert wird.

16. Verfahren nach einem der vorgehenden Ansprüche, bei dem die catabolischen Enzyme inaktiviert Polygalacturonasen sind.

17. Verfahren nach einem der vorgehenden Ansprüche, bei dem es sich bei dem Behälter um einen Beutel handelt.

18. Verfahren nach Anspruch 17, bei dem der Beutel aus Polyethylen-Kunststoff hergestellt ist.

19. Verfahren nach Anspruch 18, bei dem man den Beutel verschließt, indem man ein offenes Ende des Kunststoffbeutels verschweißt.

20. Verfahren nach einem der vorgehenden Ansprüche, bei dem der verschlossene Behälter einen Kopfraum von etwa 0,2 Volumenprozent aufweist.

21. Verfahren nach einem der vorgehenden Ansprüche, bei dem die Abdecklake Wasser und Salz aufweist und der Lake im Behälter wahlweise Geschmacks- und Farbstoffe zugesetzt werden können.

22. Verfahren nach Anspruch 17, bei dem der Beutel bei einer Gesamt-Kapazität von 80 fl.oz (2,273 x 10⁻³ m³) einen Kopfraum von etwa 5 cm³ aufweist.

23. Verfahren nach Anspruch 17, bei dem man den Beutel unter näherungsweisen Vakuumbedingungen verschließt, um den Kopfraum in der Verpackung möglich klein zu halten.

## Revendications

1. Procédé de conservation d'aliments pour un stockage à long terme à la température ambiante, sans conservateurs chimiques, qui comprend les étapes consistant :
a) à extraire de l'aliment au moins la plus grande partie du sucre, par fermentation dans une solution de saumure ayant un pH inférieur à 4,5 ;
b) à chauffer l'aliment fermenté dans de l'eau pour inactiver les enzymes cataboliques endogènes ;
c) à conditionner l'aliment dans un récipient, avec une couverture d'une solution de saumure ; et
d) à fermer hermétiquement le récipient dans des conditions proches du vide pour minimiser l'espace aérien de l'emballage.

2. Procédé selon la revendication 1, dans lequel l'aliment est un fruit, un légume ou une cucurbitacée.

3. Procédé selon la revendication 2, dans lequel le fruit est une olive.

4. Procédé selon la revendication 2, dans lequel le légume est choisi parmi les carottes, le choux, les sojas, les poivres, le chou-fleur, les artichauts et les oignons.

5. Procédé selon la revendication 2, dans lequel la cucurbitacée est un concombre.

6. Procédé selon l'une quelconque des revendications précédentes, dans lequel le stockage à long terme dure au moins environ trois mois.

7. Procédé selon l'une quelconque des revendications précédentes, dans lequel le stockage à long terme dure au moins environ six mois.

8. Procédé selon l'une quelconque des revendications précédentes, dans lequel la fermentation est mise en oeuvre par la microflore indigène de l'aliment.

9. Procédé selon l'une quelconque des revendications précédentes, dans lequel la fermentation est mise en oeuvre par addition d'une culture de microorganismes d'espèces de *Streptococcus, Leuconostoc, Pediococcus, Lactobacillus, Lactococcus, Micrococcus, Saccharomyces, Aspergillus* et leurs combinaisons.

10. Procédé selon la revendication 9, dans lequel l'espèce de *Lactobacillus* est *L. plantarum.*

11. Procédé selon la revendication 9, dans lequel l'espèce de *Pediococcus* est *P. acidilactici, P. pentosaceus* ou *P. cerevisiae.*

12. Procédé selon l'une quelconque des revendications précédentes, dans lequel l'aliment fermenté est chauffé à une température comprise entre 54°C (130°F) et 66°C (150°F) pendant un laps de temps de dix minutes à deux heures.

13. Procédé selon l'une quelconque des revendications précédentes, dans lequel l'aliment fermenté est chauffé à 60°C (140°F) pendant quarante minutes.

14. Procédé selon l'une quelconque des revendications précédentes, dans lequel la teneur de l'aliment en sels après chauffage est approximativement égale à la moitié de la teneur en sel de l'aliment fermenté avant chauffage.

15. Procédé selon la revendication 1, dans lequel l'aliment est constitué de conserves, et, après chauffage, la teneur en sels des conserves a subi une réduction d'environ 50 à environ 3 %.

16. Procédé selon l'une quelconque des revendications précédentes, dans lequel les enzymes cataboliques inactivées sont des polygalacturonases.

17. Procédé selon l'une quelconque des revendications précédentes, dans lequel le récipient est une poche souple.

18. Procédé selon la revendication 17, dans lequel la poche souple est constituée d'un plastique de polyéthylène.

19. Procédé selon la revendication 18, dans lequel la poche souple est hermétiquement fermée par chauffage pour faire fondre une extrémité ouverte de la poche plastique.

20. Procédé selon l'une quelconque des revendications précédentes, dans lequel le récipient hermétiquement fermé présente un espace aérien d'environ 0,2 % en volume.

21. Procédé selon l'une quelconque des revendications précédentes, dans lequel ladite saumure de couverture comprend de l'eau et du sel, et éventuellement des arômes et des colorants peuvent être ajoutés à la saumure se trouvant dans le récipient.

22. Procédé selon la revendication 17, dans lequel la poche a un espace aérien d'environ 5 cm³ quand la poche a une capacité totale de 2,273 x 10⁻³ m³ (80 onces fluides).

23. Procédé selon la revendication 17, dans lequel la poche est hermétiquement fermée dans des conditions proches du vide, pour minimiser l'espace de tête de l'emballage.
